# EUROPEAN PATENT APPLICATION

(11) **EP 4 198 800 A1**
(43) Date of publication of application: **21.06.2023**
(21) Application number: 22200112.5
(22) Date of filing: 06.10.2022
(51) Int. Cl.: G06F 30/15, G01M 17/00, G06N 3/00

(54) **SYSTEM AND METHOD FOR GENERATING AND SIMULATING VEHICLE EVENTS AND DATA**

(30) Priority: 16.12.2021 US 202117553428
(71) Applicant: BlackBerry Limited, Waterloo, Ontario N2K 0A7 (CA)
(72) Inventor: LUDWIG, Sue Hsiu Ying, Waterloo, N2K 0A7 (CA); LANDRY, Nicholas Ivan, Waterloo, N2K 0A7 (CA); SHUKLA, Abhishek, Waterloo, N2K 0A7 (CA); LEE, George, Waterloo, N2K 0A7 (CA)
(74) Representative: Murgitroyd & Company

(57) **Abstract**

The present disclosure provides, in an aspect, computer-implemented method for generating data associated with a vehicle event, the method including obtaining vehicle event data for a vehicle event associated with a vehicle; identifying a parameter associated with the vehicle event; emulating the parameter based on simulating the vehicle event with the vehicle event data and a model of the parameter, and extrapolating parameter data based on the simulated vehicle event.

## Description

### FIELD

The present disclosure relates generally to generating data for simulating vehicle events, and more particularly to generating data for modelling a parameter associated with a vehicle event, for use in supplementing simulation of a vehicle event.

### BACKGROUND

Adverse vehicle events, such as vehicle collisions and accidents, may present analytical challenges arising from limitations in obtaining or collecting data relating to the adverse event. Replicating adverse events also presents challenges due to the inherent destruction that may be inflicted on the vehicle, which may leave the vehicle in a damaged state, precluding use of the vehicle until repairs can be completed, or otherwise limiting the efficacy of using the vehicle to replicate the same behavior.

It remains desirable however to develop further improvements and advancements in relation to modelling, replicating, and generating vehicle events, including analysis thereof, to overcome shortcomings of known techniques, and to provide additional advantages thereto.

This section is intended to introduce various aspects of the art, which may be associated with the present disclosure. This discussion is believed to assist in providing a framework to facilitate a better understanding of particular aspects of the present disclosure. Accordingly, it should be understood that this section should be read in this light, and not necessarily as admissions of prior art.

### SUMMARY

Accordingly there is provided a method, a computer program, and a computing device as detailed in the claims that follow.

### BRIEF DESCRIPTION OF THE DRAWINGS

Embodiments of the present disclosure will now be described, by way of example only, with reference to the attached Figures.
FIG. 1 is a flow chart of an embodiment in accordance with the present disclosure of a method for generating new data for a parameter associated with a vehicle event.
FIG. 2 is a flow chart of an embodiment in accordance with the present disclosure of a method for generating new data for a parameter associated with a vehicle event, including re-simulating the vehicle event based on the new parameter data and conducting analytics thereon.
FIG. 3 is a flow chart of an embodiment in accordance with the present disclosure of a method including modifying and updating a vehicle event dataset and further generating new data for a parameter associated with the vehicle event.
FIG. 4 is a flow chart of an embodiment in accordance with the present disclosure of a method including modifying and updating a vehicle event dataset during a vehicle simulation, and further generating new data for a parameter associated with the vehicle event.
FIG. 5 is a flow chart of an embodiment in accordance with the present disclosure of a method including modifying and updating a vehicle event dataset during a vehicle simulation, and further generating new data for a parameter associated with the vehicle event, including re-simulating the vehicle event based on the new parameter data and conducting analytics thereon.
FIG. 6 is a diagram of an embodiment of the present disclosure for a Graphical User Interface (GUI) for displaying, simulating, modifying, and generating data for a vehicle event.
FIG. 7 is a block diagram of an example computing device or system for implementing a system and method for generating new vehicle data and events in accordance with the present disclosure.

Throughout the drawings, sometimes only one or fewer than all of the instances of an element visible in the view are designated by a lead line and reference character, for the sake only of simplicity and to avoid clutter. It will be understood, however, that in such cases, in accordance with the corresponding description, that all other instances are likewise designated and encompasses by the corresponding description.

### DETAILED DESCRIPTION

The following are examples of systems and methods for classifying a vehicle location in accordance with the present disclosure.

According to an aspect, the present disclosure provides a computer implemented method for generating data associated with a vehicle event, the method comprising obtaining vehicle event data for a vehicle event associated with a vehicle; identifying a parameter associated with the vehicle event; emulating the parameter based on simulating the vehicle event with the vehicle event data and a model of the parameter, and extrapolating parameter data based on the simulated vehicle event.

According to an example embodiment, the vehicle event data includes a modifiable driving parameter, the method further comprising modifying driving parameter data associated with the modifiable driving parameter, and updating the vehicle event data based on the modified driving parameter data.

According to an example embodiment, modifying the driving parameter data comprises receiving the modified driving parameter data, during simulation of the vehicle event, from an emulation device configured to replicate the modifiable driving parameter.

According to an example embodiment, the modifiable driving parameter is a direction of the vehicle and the emulation device is a steering wheel.

According to an example embodiment, the modifiable driving parameter is a speed of the vehicle and the emulation device includes a gas pedal and a brake pedal.

According to an example embodiment, the modifiable driving parameter includes at least one of a direction of the vehicle and a speed of the vehicle and the emulation device is a video game controller.

According to an example embodiment, generating data associated with the vehicle event further comprises updating the vehicle event data to include the extrapolated parameter data, and re-simulating the vehicle event with the updated vehicle event data.

According to an example embodiment, generating data associated with the vehicle event further comprises comparing the re-simulated vehicle event against the simulated vehicle event to determine a margin of error of the re-simulated vehicle event.

According to an example embodiment, the re-simulated vehicle event has a confidence interval of 90% or higher.

According to an example embodiment, the vehicle event is a collision involving the vehicle, a loss of control of the vehicle, a vehicle acceleration, a vehicle de-acceleration, a change in vehicle direction, a vehicle blind spot check, a vehicle reversal, or a vehicle parking.

According to an example embodiment, the parameter associated with the vehicle event is a vehicle cabin parameter, a weather condition, or a road condition.

According to an example embodiment, the vehicle event data comprises a plurality of vehicle event data segments, the method further comprising identifying, from the vehicle event data, a first vehicle event data segment for a first vehicle event, and a second vehicle event data segment for a second vehicle event, wherein a state of the vehicle is continuous between the first and second vehicle event data segments, and modifying the vehicle event data to comprise the first vehicle event data segment and the second vehicle event data segment.

According to an aspect, the present disclosure provides a non-transitory computer-readable medium having instructions stored thereon that, when executed by a computing device, cause the computing device to perform a method for generating data associated with a vehicle event, comprising obtaining vehicle event data for a vehicle event associated with a vehicle; identifying a parameter associated with the vehicle event; emulating the parameter based on simulating the vehicle event with the vehicle event data and a model of the parameter, and extrapolating parameter data based on the simulated vehicle event.

According to an example embodiment, the vehicle event data includes a modifiable driving parameter and generating data associated with the vehicle event further comprises modifying driving parameter data associated with the modifiable driving parameter, and updating the vehicle event data based on the modified driving parameter data.

According to an example embodiment, modifying the driving parameter data comprises receiving the modified driving parameter data, during simulation of the vehicle event, from an emulation device configured to replicate the modifiable driving parameter.

According to an example embodiment, the modifiable driving parameter includes at least one of a direction of the vehicle and a speed of the vehicle and the emulation device is a video game controller.

According to an example embodiment, the vehicle event is a collision involving the vehicle, a loss of control of the vehicle, a vehicle acceleration, a vehicle de-acceleration, a change in vehicle direction, a vehicle blind spot check, a vehicle reversal, or a vehicle parking.

According to an example embodiment, the vehicle event data comprises a plurality of vehicle event data segments and generating data associated with the vehicle event further comprises identifying, from the vehicle event data, a first vehicle event data segment for a first vehicle event, and a second vehicle event data segment for a second vehicle event, wherein the first vehicle event data segment forms a continuous vehicle event with the second vehicle event data segment, and modifying the vehicle event data to comprise the first vehicle event data segment and the second vehicle event data segment.

The vehicle simulation and data generation systems and methods disclosed herein generally leverage a dataset obtained from a vehicle event for use in generating new data or datasets for the vehicle event. Vehicle events include, but are not limited to: vehicle collisions, vehicle accidents, blind spot checks, mirror or proximity checks, vehicle driving patterns or manoeuvers including accelerating, braking, maintaining speed, reversing, turning, parking, and/or changing gears. The generated data may be used for a variety of further purposes for use in analyzing the vehicle, the vehicle event, and/or one or more parameters of the vehicle or vehicle event, including but not limited to: supplementing the original dataset with new data to fill in gaps or errors in the original dataset, generating new data for parameters not characterized in the original dataset, generating data for characterizing different conditions of the vehicle event, and/or may otherwise may be used to re-simulate the vehicle event with the newly generated data, for conducting further analysis thereupon. For example, the newly generated data may modify a grip between the vehicle and a road on the basis of weather conditions (e.g. dry versus wet) wherein re-simulating the vehicle event under the different grip conditions may provide greater insight on vehicle performance as function of weather. For another example, the newly generated data may characterize a process parameter not included in the original dataset, such as generating data for a seat sensor, to provide insights into what occurred to a seat during a vehicle event. The original dataset may further incorporate the newly generated data and the vehicle event may be re-simulated anew, to further evaluate the vehicle under new and/or different parameters, conditions, and scenarios. Examples of parameters for which data may be generated for include, but are not limited to: speed, acceleration, braking, engine RPM, vehicle orientation, tire grip, fuel level, battery charge, airbag sensors, proximity sensors, seat sensors, geolocation such a latitude and longitude as may be acquired or generated from a Global Positioning System (GPS), in-vehicle camera data, Heating Ventilation and Air Conditioning (HVAC) settings, door sensors, Electric Vehicle (EV) parameters such as mileage range of charge and Battery Management Status (BMS), window sensors, tire pressure, ignition status, headlamp state, windshield wiper state, Anti-Lock Braking System (ABS) status, tracking control status, lane drift, seatbelt status, steering input, gear selector, differential status, and status of various driver aids.

The original dataset for the corresponding vehicle event generally includes data sufficient for replicating a driving pattern of a vehicle for a vehicle event, such as modifiable driving parameters. For example, the original dataset may include engine torque, brake pedal actuation, accelerator pedal actuation, gear selection, relative tire tread, steering angle offset, traction control, ABS status, vehicle speed, engine RPM, vehicle orientation (e.g. pitch, roll, and yaw), engine Horse Power (HP) and engine displacement. In an embodiment, the original dataset for replicating a driving pattern for a vehicle for a vehicle invent includes ignition status, traction control status, ABS status, accelerator input, brake input, gear selector position, transmission type (e.g. auto or manual), steering input, steering angle offset, drive type (e.g. all-wheel drive (AWD), forward-wheel drive (FWD), or rear-wheel drive (RWD), vehicle location, vehicle heading (e.g. yaw or azimuth), powertrain battery pack output current, powertrain battery pack temperature, engine/battery coolant temperature, battery pack discharge rate, alternator load, min/max battery voltage, max battery current, and min/max battery temperature . Such datasets may be obtained directly from a vehicle. For example such data may be obtained from a vehicle equipped with a sensor system having speed sensors, steering wheel sensors, accelerometers, gyroscopes, brake sensors, and/or other sensors for generating data for use in characterizing a driving pattern of the vehicle for a vehicle event. Such data sets may further include, or be supplemented with, artificially generated data. For example, hardware or software emulation may be used to emulate a gas pedal and/or brake pedal for use in generating speed, acceleration, and braking data for inclusion with a dataset for characterizing a vehicle driving pattern during a vehicle event. Such vehicle event datasets may be saved and stored in a computer-readable storage medium and obtained therefrom as needed, for use in generating new data in accordance with the present disclosure. Embodiments in accordance with the present disclosure may obtain or modify vehicle event data in in real-time. In an embodiment, the hardware emulation includes a replica vehicle cabin and a plurality of replica controls for emulating data generation for the vehicle.

Embodiments according to the present disclosure may further include features for gamification. For example, a vehicle event may be updated to include new or additional data and/or parameters in the vehicle event dataset. The updated vehicle event dataset may be further simulated or analyzed to assess performance of the vehicle and/or various vehicle parameters in relation to the updated vehicle event. Analytics for the re-simulated event may include, margins of error and a confidence interval, which may further serve as a basis for generating a gaming score, to gamify the updated/modified vehicle event dataset, for use in comparing one dataset with another.

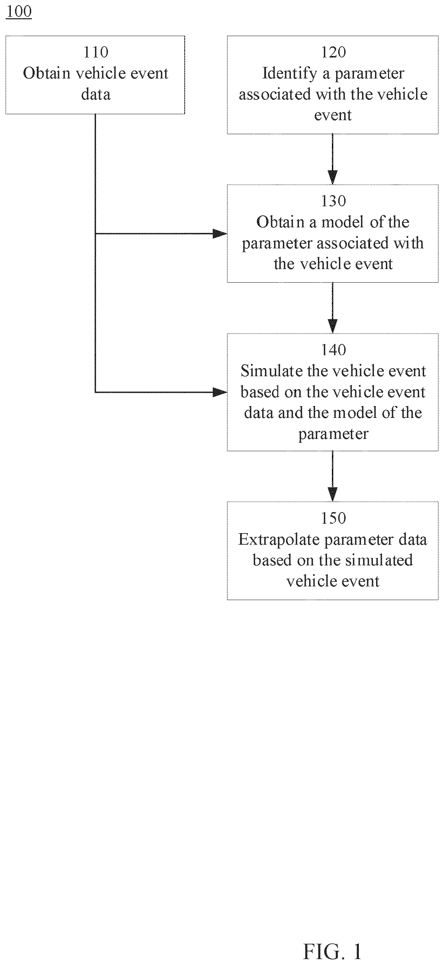

FIG. 1 illustrates a method 100 for generating new vehicle event data for a vehicle event in accordance with an embodiment of the present disclosure. The operation of method 100 is not intended to be limiting but rather illustrates an example of generating new vehicle event data for a vehicle event. In some embodiments, method 100 may be accomplished with one or more additional operations not described, and/or without one or more of the operations described. Similarly, the order in which the operation of method 100 is illustrated and described below is not intended to be limiting, but rather illustrative of an example of generating new vehicle event data in accordance with the present disclosure.

In some embodiments, method 100 may be implemented in one or more processing devices (e.g., a digital processor, an analog processor, a digital circuit designed to process information, an analog circuit designed to process information, a computing network implemented in the cloud, a state machine, and/or other mechanisms for electronically processing information). The one or more processing devices may include one or more devices executing some or all of the operations of method 100 in response to instructions stored electronically on an electronic storage medium. The one or more processing devices may include one or more devices configured through hardware, firmware, and/or software to be specifically designed for execution of one or more of the operations of method 100.

An operation 110 may include obtaining vehicle event data that characterizes a driving pattern for a vehicle for an associated vehicle event. Vehicle events include but are not limited to: vehicle collisions, vehicle accidents, blind spot checks, mirror or proximity checks, vehicle driving patterns or manoeuvers including accelerating, braking, maintaining speed, reversing, turning, parking, and/or changing gears. Vehicle event data may be obtained directly from a vehicle, may have been previously saved to a storage-medium and obtained therefrom, or may otherwise be obtained or supplemented through other means, such as by using hardware or software emulation to replicate a gas pedal, brake pedal, steering wheel and/or other emulated sensors for use in generating supplemental data for characterizing the driving pattern of the vehicle during the associated vehicle event. The vehicle event data obtained in operation 110 may act as an input to an operation 130 for obtaining a model of the parameter associated with the vehicle event and/or to an operation 140 which simulates the vehicle event.

An operation 110 may also be based on vehicle event data from a plurality of overlapping vehicle events. For example, the vehicle event data may comprise a first vehicle event data segment corresponding to a first vehicle event; and, a second vehicle event data segment corresponding to a second vehicle event. The first vehicle event may for example correspond to a first driving pattern in relation to movement from a starting vehicle location to a first vehicle location; and, the second vehicle event may correspond to a second driving pattern in relation to movement from the starting vehicle location to a second vehicle location, wherein the first vehicle event and the second vehicle event overlap with one another from the starting vehicle location to an intermediate location. In an embodiment, the intermediate location may occur before either of the first location or the second location. In an embodiment, the intermediate location may be the first location or the second location. In an embodiment, the first location and the second location are the same location. In an embodiment, the first vehicle driving pattern may be the same as the second vehicle driving pattern from the starting location to the intermediate location.

As a further example, the vehicle event data may comprise a third vehicle event data segment corresponding to a third vehicle event. The third vehicle event may for example correspond to a third driving pattern in relation to movement from the intermediate location to a third vehicle location. In an embodiment, the third location may be different than each of the first and second vehicle locations. In an embodiment, the third location may be the same as the first location and/or the second location. Accordingly, embodiments of a vehicle event dataset in accordance with the disclosure may include a plurality of vehicle event data segments that share overlapping portions or data points for use in combining together to evaluate different variables and outcomes in relation to vehicle events, such as for example, combining together in an operation 140 to simulate different aspects or segments of a vehicle event.

An operation 120 may include identifying a parameter associated with the vehicle event for which further data is desired. In an embodiment, the vehicle event data may include a partial or incomplete dataset of the parameter, whereby additional data for the parameter may be desired. In an embodiment, the vehicle event data does not include data of the parameter. Examples of parameters for a vehicle event include, but are not limited to: speed, acceleration, braking, engine RPM, vehicle orientation, tire grip, fuel level, battery charge, airbag sensors, proximity sensors, seat sensors, geolocation such a latitude and longitude as may be acquired or generated from a Global Positioning System (GPS), in-vehicle camera data, Heating Ventilation and Air Conditioning (HVAC) settings, door sensors, Electric Vehicle (EV) parameters such as mileage range of charge and Battery Management Status (BMS), window sensors, tire pressure, ignition status, headlamp state, windshield wiper state, Anti-Lock Braking System (ABS) status, tracking control status, lane drift, seatbelt status, steering input, gear selector, differential status, and status of various driver aids.

An operation 130 may include identifying a model of the parameter identified in operation 120. The model of the parameter may serve as an input into operation 140, for simulating the vehicle event based on the vehicle event data obtained in operation 110 and the model of the parameter obtained in operation 130. The model of the parameter may be used in conjunction with the vehicle event data as a basis for emulating the parameter during simulation of the vehicle event, and generating new parameter data for the desired parameter therefrom. The model of the parameter may be derived in a number of ways. For example, an operation 130 may include receiving the vehicle event data obtained in operation 110, and applying pattern recognition to the vehicle event data to establish a pattern or model of expected behaviour for the parameter. For example, the vehicle event data may have gaps, errors, or omissions in vehicle speed, and pattern recognition may be applied to the vehicle event data to establish a pattern or model of vehicle speed based on other data in the vehicle event data set. Or as a further example, an operation 130 may be used to extrapolate or model patterns for use in extending the vehicle data over a greater period of time. In an embodiment, extending the vehicle data over a greater period of time may include extending the data to traverse a reverse route for completing a round trip between two locations. For example, the vehicle event data may comprise data for a vehicle event encompassing a vehicle traversing from a first location to a second location; and, extending the data may comprise extending the vehicle event data to encompass the vehicle traversing from the second location to the first location based on a state of the vehicle at the second location. The model and/or new data may be further provided to an operation 140 for use in simulating and generating new data. In an embodiment, an operation 130 includes applying a machine learning algorithm to the vehicle event data to generate a model of a parameter and/or generate data for the parameter. In an embodiment, an operation 130 may be applied to a subset of the vehicle event data, such as a first vehicle event data segment corresponding to a first driving pattern for a first vehicle event. In an embodiment, the operation 130 includes generating new data, for use as an input to operation 140.

In an embodiment, an operation 130 may receive a vehicle data set having a discontinuity. For example, the vehicle event data may include a gap in data between consecutive vehicle event segments, such as a gap between a first vehicle event data segment and a second vehicle event data segment. An operation 130 may, generate a model of the vehicle event based on the first and second vehicle event data segments, for example using a machine learning algorithm, to generate new date to bridge the discontinuity or gap between the two data segments.

An operation 140 may include simulating the vehicle event based on the vehicle event data obtained in operation 110 and the model of the parameter obtained in operation 130. In this regard, the operation 140 may emulate the parameter based on simulating the vehicle event data with a model of the parameter, thereby providing a basis to generate new data for an operation 150 of extrapolating parameter data from the simulated vehicle event. An operation 150 may include extrapolating parameter data from the simulated vehicle event operation 140 and assessing a statistical value of the extrapolated data, such as a confidence interval or a margin of error of the extrapolated parameter data. In an embodiment, the operation 140 may receive new data from an operation 130, based on new data generated during operation 130, to supplement, replace, or fill in gaps in data that the vehicle dataset obtained from operation 110 may contain.

Operation 140 may simulate the vehicle event data in whole or in part, or based on different segments of data contained in the vehicle event data set. For example, operation 140 may simulate a first vehicle event based on continuity between a first vehicle event data segment and a third vehicle event data segment; or may simulate a second vehicle event based on continuity between a second vehicle event data segment and a third vehicle event data segment; and so forth.

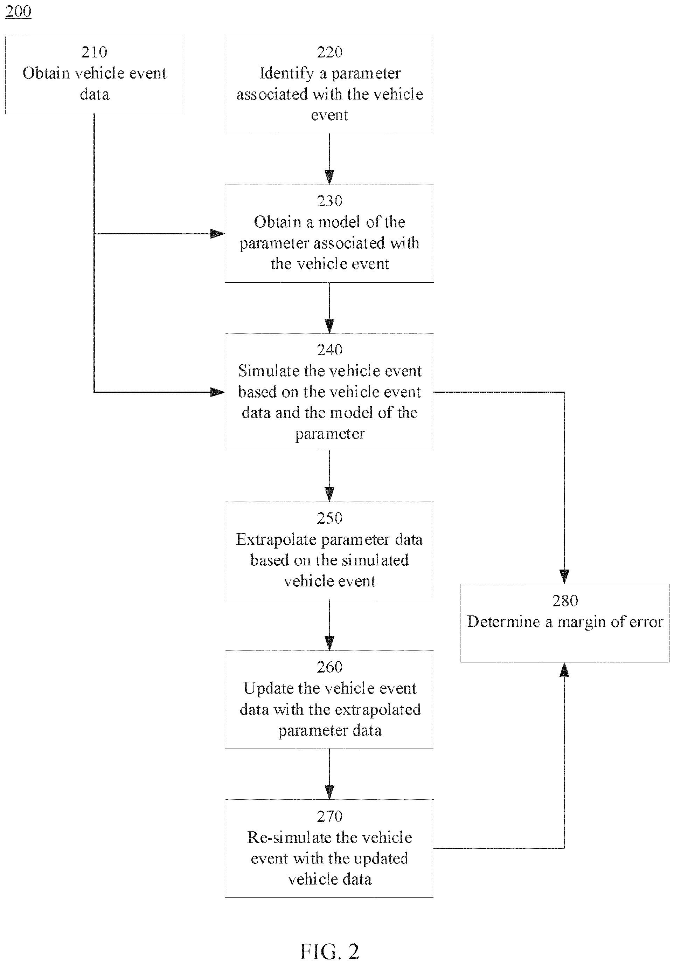

FIG. 2 illustrates a method 200 for generating new vehicle event data for a vehicle event in accordance with an embodiment of the present disclosure. The operation of method 200 is not intended to be limiting but rather illustrates an example of generating new vehicle event data for a vehicle event. In some embodiments, method 200 may be accomplished with one or more additional operations not described, and/or without one or more of the operations described. Similarly, the order in which the operation of method 200 is illustrated and described below is not intended to be limiting, but rather illustrative of an example of generating new vehicle event data in accordance with the present disclosure.

In some embodiments, method 200 may be implemented in one or more processing devices (e.g., a digital processor, an analog processor, a digital circuit designed to process information, an analog circuit designed to process information, a computing network implemented in the cloud, a state machine, and/or other mechanisms for electronically processing information). The one or more processing devices may include one or more devices executing some or all of the operations of method 200 in response to instructions stored electronically on an electronic storage medium. The one or more processing devices may include one or more devices configured through hardware, firmware, and/or software to be specifically designed for execution of one or more of the operations of method 200.

Method 200 may include operations corresponding to the equivalent or same of respective operations described in relation to method 100. For example, operation 210 for obtaining a vehicle event data, operation 220 for identifying a parameter associated with the vehicle event, operation 230 for obtaining a model of the parameter associated with the vehicle event, operation 240 for simulating the vehicle event based on the vehicle event data and the model of the parameter, and an operation 250 for extrapolating parameter data from the simulated vehicle event, may be performed at least according to corresponding operations 110, 120, 130, 140, and 150 according to method 100. Method 200 may also further include operations 260, 270, and 280, as described below.

Operation 260 may include updating the vehicle event data to incorporate the extrapolated parameter data obtained in operation 250. The updated vehicle event data may then serve as a basis for further simulations under methods 100 or 200. For example, operations 110 and 210 for obtaining vehicle event data, may obtain the updated vehicle event data from operation 260. Advantageously, the updated vehicle event data may then serve as an input to simulation operations 140 or 240, in conjunction with simulating a vehicle event for a new or different parameter and parameter model as identified in corresponding operations 120/130 and 220/230. As another example, the updated vehicle event data may simply be re-simulated as part of evaluating a statistical value of the updated vehicle event dataset, such as for example evaluating a confidence interval or margin of error of the updated vehicle event dataset.

An operation 270 may include re-simulating the vehicle event with the updated vehicle event data obtained from operation 260. The output of the re-simulated vehicle event may serve as an input to operation 280 for comparison with the output of the simulated event from operation 240. Operation 280 may compare the re-simulated vehicle event with the original simulated vehicle event to compare outcomes, or determine other analytical information, such as a margin of error or confidence interval of the re-simulated vehicle event. In an embodiment, the output of operation 280 is a score, for use in gamifying a statistical characteristic of the re-simulated vehicle event.

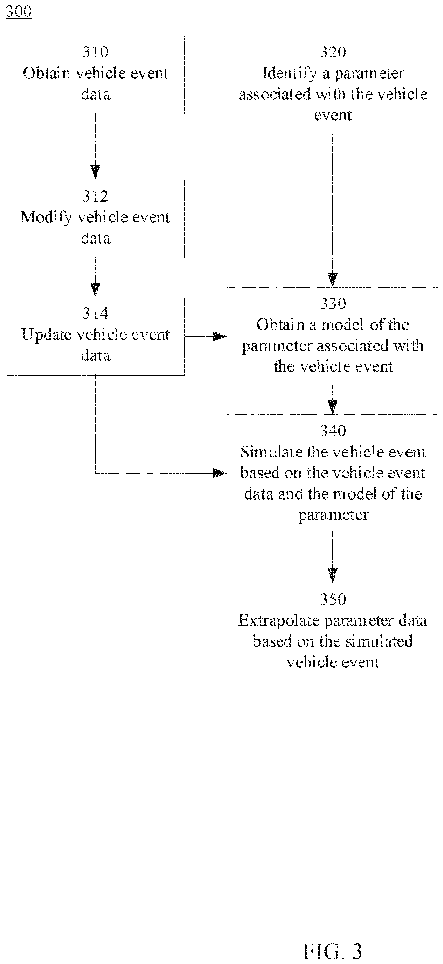

FIG. 3 illustrates a method 300 for generating new vehicle event data for a vehicle event in accordance with an embodiment of the present disclosure. The operation of method 300 is not intended to be limiting but rather illustrates an example of generating new vehicle event data for a vehicle event. In some embodiments, method 300 may be accomplished with one or more additional operations not described, and/or without one or more of the operations described. Similarly, the order in which the operation of method 300 is illustrated and described below is not intended to be limiting, but rather illustrative of an example of generating new vehicle event data in accordance with the present disclosure.

In some embodiments, method 300 may be implemented in one or more processing devices (e.g., a digital processor, an analog processor, a digital circuit designed to process information, an analog circuit designed to process information, a computing network implemented in the cloud, a state machine, and/or other mechanisms for electronically processing information). The one or more processing devices may include one or more devices executing some or all of the operations of method 300 in response to instructions stored electronically on an electronic storage medium. The one or more processing devices may include one or more devices configured through hardware, firmware, and/or software to be specifically designed for execution of one or more of the operations of method 300.

Method 300 may include operations corresponding to the equivalent or same of respective operations described in relation to method 100 or method 200. For example, operation 310 for obtaining a vehicle event data, operation 320 for identifying a parameter associated with the vehicle event, operation 330 for obtaining a model of the parameter associated with the vehicle event, operation 340 for simulating the vehicle event based on the vehicle event data and the model of the parameter, and an operation 350 for extrapolating parameter data from the simulated vehicle event, may be performed at least according to corresponding operations 110, 120, 130, 140, and 150 according to method 100 and corresponding operations 210, 220, 230, 240, and 250 according to method 200. Method 300 may also further include operations 312 and 314 as described below, and may similarly implement operations from method 200 corresponding to operations 260, 270, and 280.

Method 300 may include operations 312 and 314 respectively corresponding to modifying and updating the vehicle event data obtained in operation 310. Modifying vehicle event data may include, but is not limited to: inserting additional data points into the vehicle event data to address gaps, errors, or omissions in the vehicle event dataset, modifying data to different values (e.g. changing the speed of the vehicle at certain points in time), and/or extending a duration of the vehicle event by extrapolating the vehicle event data to cover a further duration of time. In an embodiment, modifying vehicle event data includes using a graphical user interface (GUI) to visually inspect, modify, and generate vehicle event data. In an embodiment, hardware emulation may be used to generate or insert missing data, for example hardware emulation for a gas pedal may be used to generate vehicle speed and acceleration data for the vehicle event, for use in filling in gaps in the vehicle event dataset, overriding data in the vehicle event dataset, or generating new data for the vehicle event dataset. Once operation 312 is completed, operation 314 may be invoked to update the vehicle event data and further serve as an input to operation 340, for simulating the vehicle event with the updated vehicle event data.

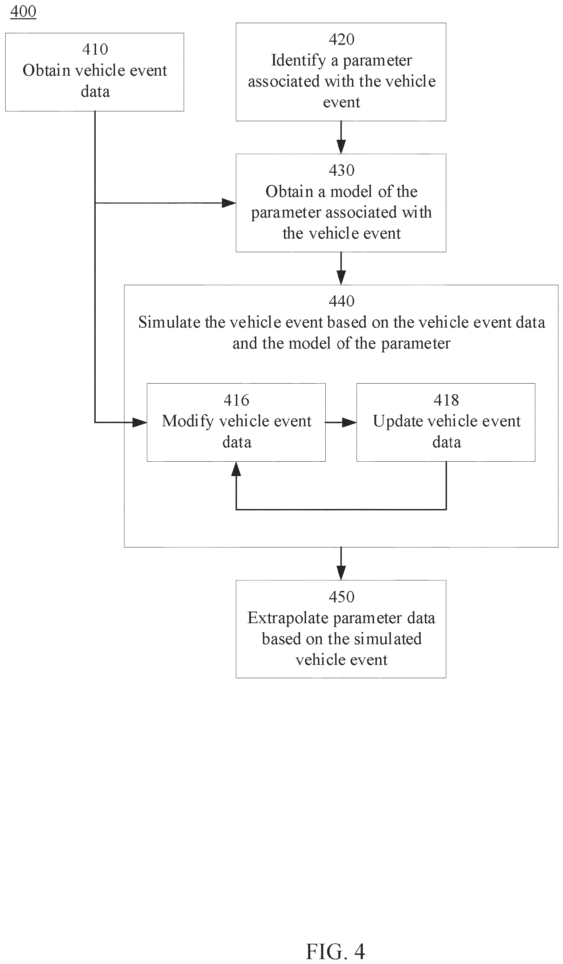

FIG. 4 illustrates a method 400 for generating new vehicle event data for a vehicle event in accordance with an embodiment of the present disclosure. The operation of method 400 is not intended to be limiting but rather illustrates an example of generating new vehicle event data for a vehicle event. In some embodiments, method 400 may be accomplished with one or more additional operations not described, and/or without one or more of the operations described. Similarly, the order in which the operation of method 400 is illustrated and described below is not intended to be limiting, but rather illustrative of an example of generating new vehicle event data in accordance with the present disclosure.

In some embodiments, method 400 may be implemented in one or more processing devices (e.g., a digital processor, an analog processor, a digital circuit designed to process information, an analog circuit designed to process information, a computing network implemented in the cloud, a state machine, and/or other mechanisms for electronically processing information). The one or more processing devices may include one or more devices executing some or all of the operations of method 400 in response to instructions stored electronically on an electronic storage medium. The one or more processing devices may include one or more devices configured through hardware, firmware, and/or software to be specifically designed for execution of one or more of the operations of method 400.

Method 400 may include operations corresponding to the equivalent or same of respective operations described in relation to methods 100, 200, and/or 300. For example, operation 410 for obtaining a vehicle event data, operation 420 for identifying a parameter associated with the vehicle event, operation 430 for obtaining a model of the parameter associated with the vehicle event, operation 440 for simulating the vehicle event based on the vehicle event data and the model of the parameter, and an operation 450 for extrapolating parameter data from the simulated vehicle event, may be performed at least according to corresponding operations 110, 120, 130, 140, and 150 according to method 100 and to corresponding operations in accordance with methods 200 and/or method 300. Method 400 may also further include operations 416 and 418 as described below, and may similarly implement operations from method 200 and method 300, such as operations 260, 270, 280, 312, and/or 314.

Method 400 may include operations 416 and 418 respectively corresponding to modifying and updating the vehicle event data during an operation 440 of simulating the vehicle event data with the model of the parameter. Modifying vehicle event data may include, but is not limited to: inserting additional data points into the vehicle event data to address gaps, errors, or omissions in the vehicle event dataset, modifying data to different values (e.g. changing the speed of the vehicle at certain points in time), and/or extending a duration of the vehicle event by extrapolating the vehicle event data to cover a further duration of time.

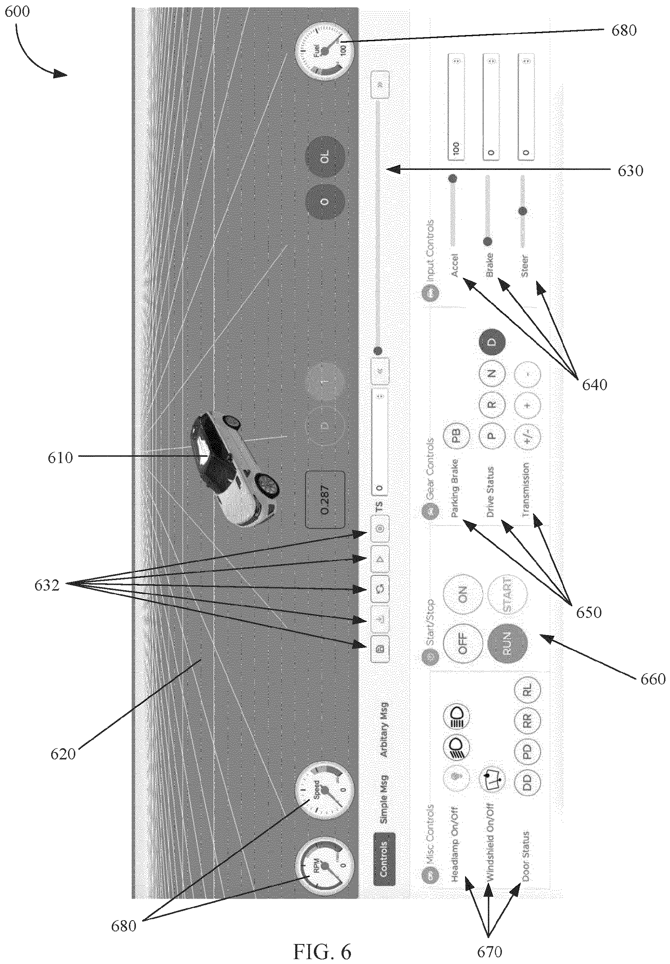

Operations 416 and 418 may be leveraged as desired to change and modify vehicle event data during the vehicle event simulation of operation 440. Modifying and updating the vehicle event data may be completed in real-time or near real-time, during the simulation, or for example, the vehicle simulation may be paused during operation 440, providing opportunity to selectively modify and update the vehicle event data. For example, operation 416 may leverage hardware or software emulation for a gas pedal to generate data for a speed and/or an acceleration of the vehicle. The data generated from the emulated gas pedal may be used to supplement, replace, or otherwise provide a new stream of data for the vehicle event to simulate. The emulated gas pedal may thus provide updated data during the simulation as part of operation 416 to modify the vehicle event data. In an embodiment, modifying vehicle event data includes using a graphical user interface (GUI) to visually inspect, modify, and generate vehicle event data, such as the GUI 600 described in relation to FIG. 6. Operation 418 may update the vehicle event data in real-time or near real-time during the vehicle event simulation of operation 440. Operation 418 may update the vehicle event data in a number of ways, for example, operation 418 may simply replace and/or update missing or erroneous data with the newly generated data. In an embodiment, operation 418 may override existing data in the vehicle event data. In an embodiment operation 416 creates data for a new parameter not characterized or omitted from the vehicle event dataset, wherein operation 418 may update the vehicle event dataset to include the new parameter data.

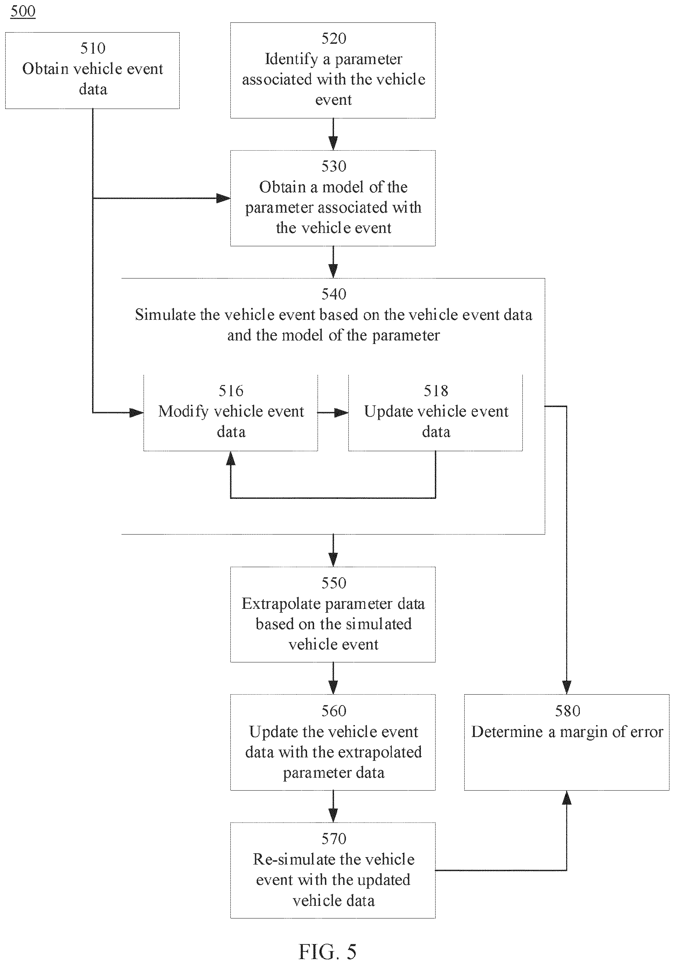

FIG. 5 illustrates a method 500 for generating new vehicle event data for a vehicle event in accordance with an embodiment of the present disclosure. The operation of method 500 is not intended to be limiting but rather illustrates an example of generating new vehicle event data for a vehicle event. In some embodiments, method 500 may be accomplished with one or more additional operations not described, and/or without one or more of the operations described. Similarly, the order in which the operation of method 500 is illustrated and described below is not intended to be limiting, but rather illustrative of an example of generating new vehicle event data in accordance with the present disclosure.

In some embodiments, method 500 may be implemented in one or more processing devices (e.g., a digital processor, an analog processor, a digital circuit designed to process information, an analog circuit designed to process information, a computing network implemented in the cloud, a state machine, and/or other mechanisms for electronically processing information). The one or more processing devices may include one or more devices executing some or all of the operations of method 500 in response to instructions stored electronically on an electronic storage medium. The one or more processing devices may include one or more devices configured through hardware, firmware, and/or software to be specifically designed for execution of one or more of the operations of method 500.

Method 500 may include operations corresponding to the equivalent or same of respective operations described in relation to methods 100, 200, 300, and/or 400. For example, operation 510 for obtaining a vehicle event data, operation 520 for identifying a parameter associated with the vehicle event, operation 530 for obtaining a model of the parameter associated with the vehicle event, operation 540 for simulating the vehicle event based on the vehicle event data and the model of the parameter, and an operation 550 for extrapolating parameter data from the simulated vehicle event, may be performed at least according to corresponding operations 110, 120, 130, 140, and 150 according to method 100 and to corresponding operations in accordance with methods 200, 300, and/or 400.

Method 500 may also further include operations 516 for modifying vehicle event data and operation 518 for updating vehicle event data during the simulated vehicle event of operation 540 in a manner corresponding to the equivalent or same of respective operations 416 and 418 of method 400.

Method 500 may also further include operations 550 for extrapolating parameter data based on the simulated vehicle event of operation 540, operation 560 for updating the vehicle event dataset with the extrapolated parameter data of 550, operation 570 for re-simulating the vehicle event with the updated vehicle event dataset of operation 560, and operation 580 for determining a margin of error - or other analytics - of the re-simulated vehicle event, in a manner corresponding to the equivalent or same of respective operations 250, 260, 270, and/or 280 of method 200.

FIG. 6 is an embodiment of a GUI 600 for use in visually displaying, simulating, controlling, and generating new data for a vehicle event in accordance with an embodiment of the present disclosure, such as in accordance with any one of methods 100, 200, 300, 400, and 500. The GUI 600 includes a visual representation of the vehicle 610 overlaid on a plain gridded backdrop 620, for providing a visual representation of the vehicle 610 during a vehicle event, as may be visually depicted for example during operations 140, 240, 340, 440, and 550 for simulating a vehicle event, or operations 270 and 570 for re-simulating the vehicle event with updated vehicle event data. The GUI 600 may include a timeline 630 and a plurality of GUI and timeline controls 632 which may include but are not limited to controls for loading vehicle datasets, saving vehicle datasets, rewinding to a previous point in time during a simulation, pausing a simulation, and/or stopping a simulation. The timeline 630 may comprise a slider bar for selectively changing to a particular point in time of the vehicle event.

The GUI 600 may further include a plurality of controls and corresponding indicators 640, 650, 660, and 670, for use modifying and visually representing the vehicle event, modifying and visually representing parameters and data associated with the vehicle event, and/or generating and visually representing new data. For example, input controls 640 may include controls and visual indicators for acceleration, braking, and steering for the vehicle 610. The visual indicators associated with input controls 640 may reflect parameters or data contained in the vehicle event dataset, and the controls 640 may be used to modify parameters or data in the vehicle event dataset, such as by using slider bar controls or hardware emulation to modify or generate data for acceleration, braking, and/or steering, in accordance with one or more operations described herein, such as in accordance with operations 110, 210, 310, 312, 410, 416, 510, and/or 516. Similarly, gear controls 650 may include controls and visual indicators for a parking brake, drive status, and transmission status; start/stop controls 660 may include controls for turning the vehicle 610 on or off, including starting the engine; and, miscellaneous controls 670 may include controls and visual indicators for headlights, windshield wipers, and/or door status. The GUI 600 may further include a plurality of visual indicators 680, such as visual indicators for engine RPM, visual speed, and fuel status 680 whether based on a petrol level or battery charge.

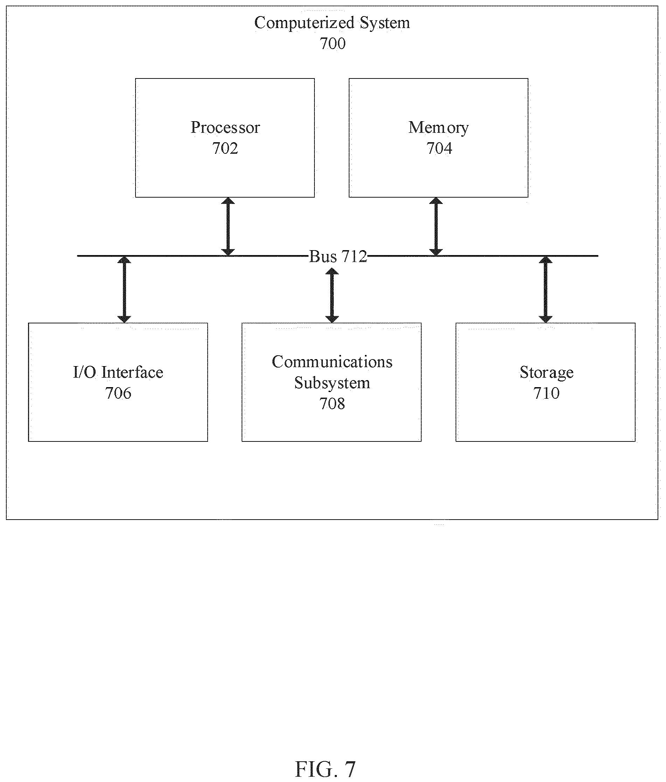

FIG. 7 is a block diagram of an example computerized device or system 700 that may be used in implementing one or more aspects or components of an embodiment of a system and method for generating and simulating vehicle events in accordance with the present disclosure, for example implementing one or more operations as described in relation to methods 100, 200, 300, 400, and/or 500; and/or, for example, for use in implementing a GUI 600.

Computerized system 700 may include one or more of a processor 702, memory 704, a mass storage device 710, an input/output (I/O) interface 706, and a communications subsystem 708. Further, system 700 may comprise multiples, for example multiple processors 702, and/or multiple memories 704, etc. Processor 702 may comprise one or more of a digital processor, an analog processor, a digital circuit designed to process information, an analog circuit designed to process information, a state machine, and/or other mechanisms for electronically processing information. These processing units may be physically located within the same device, or the processor 702 may represent processing functionality of a plurality of devices operating in coordination. The processor 702 may be configured to execute modules by software; hardware; firmware; some combination of software, hardware, and/or firmware; and/or other mechanisms for configuring processing capabilities on the processor 702, or to otherwise perform the functionality attributed to the module and may include one or more physical processors during execution of processor readable instructions, the processor readable instructions, circuitry, hardware, storage media, or any other components.

One or more of the components or subsystems of computerized system 700 may be interconnected by way of one or more buses 712 or in any other suitable manner.

The bus 712 may be one or more of any type of several bus architectures including a memory bus, storage bus, memory controller bus, peripheral bus, or the like. The CPU 702 may comprise any type of electronic data processor. The memory 704 may comprise any type of system memory such as dynamic random access memory (DRAM), static random access memory (SRAM), synchronous DRAM (SDRAM), read-only memory (ROM), a combination thereof, or the like. In an embodiment, the memory may include ROM for use at boot-up, and DRAM for program and data storage for use while executing programs.

The mass storage device 710 may comprise any type of storage device configured to store data, programs, and other information and to make the data, programs, and other information accessible via the bus 712. The mass storage device 710 may comprise one or more of a solid state drive, hard disk drive, a magnetic disk drive, an optical disk drive, or the like. In some embodiments, data, programs, or other information may be stored remotely, for example in the cloud. Computerized system 700 may send or receive information to the remote storage in any suitable way, including via communications subsystem 708 over a network or other data communication medium.

The I/O interface 706 may provide interfaces for enabling wired and/or wireless communications between computerized system 700 and one or more other devices or systems. For instance, I/O interface 706 may be used to communicatively couple with sensors, such as cameras or video cameras. Furthermore, additional or fewer interfaces may be utilized. For example, one or more serial interfaces such as Universal Serial Bus (USB) (not shown) may be provided.

Computerized system 700 may be used to configure, operate, control, monitor, sense, and/or adjust devices, systems, and/or methods according to the present disclosure.

A communications subsystem 708 may be provided for one or both of transmitting and receiving signals over any form or medium of digital data communication, including a communication network. Examples of communication networks include a local area network (LAN), a wide area network (WAN), an inter-network such as the Internet, and peer-to-peer networks such as ad hoc peer-to-peer networks. Communications subsystem 708 may include any component or collection of components for enabling communications over one or more wired and wireless interfaces. These interfaces may include but are not limited to USB, Ethernet (e.g. IEEE 802.3), high-definition multimedia interface (HDMI), Firewire^{™} (e.g. IEEE 1394), Thunderbolt^{™}, WiFi^{™} (e.g. IEEE 802.11), WiMAX (e.g. IEEE 802.16), Bluetooth^{™}, or Near-field communications (NFC), as well as GPRS, UMTS, LTE, LTE-A, and dedicated short range communication (DSRC). Communication subsystem 708 may include one or more ports or other components (not shown) for one or more wired connections. Additionally or alternatively, communication subsystem 708 may include one or more transmitters, receivers, and/or antenna elements (none of which are shown).

Computerized system 700 of FIG. 7 is merely an example and is not meant to be limiting. Various embodiments may utilize some or all of the components shown or described. Some embodiments may use other components not shown or described but known to persons skilled in the art.

In the preceding description, for purposes of explanation, numerous details are set forth in order to provide a thorough understanding of the embodiments. However, it will be apparent to one skilled in the art that these specific details are not required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or nonvolatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A computer-implemented method for generating data associated with a vehicle event, comprising:
obtaining vehicle event data for a vehicle event associated with a vehicle;
identifying a parameter associated with the vehicle event;
emulating the parameter based on simulating the vehicle event with the vehicle event data and a model of the parameter, and
extrapolating parameter data based on the simulated vehicle event.

2. The computer-implemented method of claim 1, wherein the vehicle event data includes a modifiable driving parameter, the method further comprising:
modifying driving parameter data associated with the modifiable driving parameter, and
updating the vehicle event data based on the modified driving parameter data.

3. The computer-implemented method of claim 2, wherein modifying the driving parameter data comprises:
receiving the modified driving parameter data, during simulation of the vehicle event, from an emulation device configured to replicate the modifiable driving parameter.

4. The computer-implemented method of claim 3, wherein the modifiable driving parameter is a direction of the vehicle and the emulation device is a steering wheel.

5. The computer-implemented method of claim 3, wherein the modifiable driving parameter is a speed of the vehicle and the emulation device includes a gas pedal and a brake pedal.

6. The computer-implemented method of claim 3, wherein the modifiable driving parameter includes at least one of a direction of the vehicle and a speed of the vehicle and the emulation device is a video game controller.

7. The computer-implemented method of any preceding claim, further comprising:
updating the vehicle event data to include the extrapolated parameter data, and
re-simulating the vehicle event with the updated vehicle event data.

8. The computer-implemented method of claim 7, further comprising:
comparing the re-simulated vehicle event against the simulated vehicle event to determine a margin of error of the re-simulated vehicle event.

9. The computer-implemented method of claim 7, wherein the re-simulated vehicle event has a confidence interval of 90% or higher.

10. The computer-implemented method of any preceding claim, wherein the vehicle event is a collision involving the vehicle, a loss of control of the vehicle, a vehicle acceleration, a vehicle de-acceleration, a change in vehicle direction, a vehicle blind spot check, a vehicle reversal, or a vehicle parking.

11. The computer-implemented method of any preceding claim, wherein the parameter associated with the vehicle event is a vehicle cabin parameter, a weather condition, or a road condition.

12. The computer-implemented method of any preceding claim, wherein the vehicle event data comprises a plurality of vehicle event data segments, the method further comprising:
identifying, from the vehicle event data, a first vehicle event data segment for a first vehicle event, and a second vehicle event data segment for a second vehicle event, wherein a state of the vehicle is continuous between the first and second vehicle event data segments, and
modifying the vehicle event data to comprise the first vehicle event data segment and the second vehicle event data segment.

13. A computer program which, when executed by a computing device, is configured to cause the computing device to perform the method of any preceding claim.

14. A computing device comprising a processor, the device being configured to carry out the method of any one of claims 1 to 12.
